# EUROPÄISCHE PATENTSCHRIFT

(11) **EP 0 423 571 B1**
(45) Veröffentlichungstag und Bekanntmachung des Hinweises auf die Patenterteilung: **29.12.1993**
(21) Anmeldenummer: 90119207.0
(22) Anmeldetag: 06.10.1990
(51) Int. Cl.: C08C 19/44, C08F 8/00

(54) **Verzweigte Copolymerisate**
Branched copolymers
Copolymères ramifiés

(30) Priorität: 14.10.1989 DE 3934450
(43) Veröffentlichungstag der Anmeldung: 24.04.1991
(73) Patentinhaber: BASF Aktiengesellschaft, 67063 Ludwigshafen (DE)
(72) Erfinder: Bender, Dietmar, Dr., W-6707 Schiffertadt (DE); Bronstert, Klaus, Dr., W-6719 Carlsberg (DE); Walter, Hans-Michael, Dr., W-6713 Freinsheim (DE); Wagner, Daniel, Dr., W-6702 Bad Duerkheim (DE); Mach, Helmut, Dr., W-6900 Heidelberg (DE)

(56) Entgegenhaltungen:
- FR-A- 2 278 716

## Beschreibung

Die Erfindung betrifft sternförmig verzweigte Copolymerisate aus vinylaromatischen Kohlenwasserstoffen und konjugierten Dienen, welche durch anionische Lösungsmittelpolymerisation der Monomeren mittels alkalimetallorganischen Initiatoren und anschließende Kupplung zugänglich sind.

Mittels metallorganischer Initiatoren lassen sich Vinylaromaten und Diene zu lebenden Polymeren umsetzen, die durch geeignete Agenzien modifiziert werden können (vgl. M. Swarc: Living Polymers and Mechanisms of Anionic Polymerization" in Advances Polymer Science 49, Springer Verlag [1983]). Neben der Einführung polarer Endgruppen durch Abbruch mit elektrophilen Reaktionspartnern ist die Kupplungsreaktion die am intensivsten untersuchte Umsetzung. Unter Kupplung versteht man in diesem Zusammenhang die hauptvalenzmäßige Verknüpfung von zwei, drei oder mehreren Polymersegmenten durch ein geeignetes Agens, das mit den carbanionischen Zentren der lebenden Polymerkette in Reaktion tritt, so daß Polymere der Molmasse [Mₙ]k entstehen, wobei Mₙ die zahlengemittelte Molmasse des ehemals lebenden, i.a. linearen Polymeren und k den Kupplungsgrad angibt.

Je nach Wahl des Initiators und der Verfahrensweise kann man Blockpolymerisate oder Copolymerisate mit statistischer Verteilung erhalten. (J. appl. Polym. Sci. 22, [1978], Seite 2007-2013).

Homo-, Block- und statistische Copolymerisate von Vinylaromaten und Dienen können über multifunktionelle, reaktionsfähige Verbindungen miteinander gekuppelt werden. In der technischen Literatur werden eine Vielzahl von Kupplungsreagenzien beschrieben (Rubber Chem. and Techn. 49, (5), 1305, [1976].

Kupplungsreaktionen stellen eine einfache Methode dar, die Eigenschaften von Polymeren nachhaltig zu beeinflussen. So ist bekannt, daß z.B. im Fall der Dienpolymerisation durch die Kupplung die Mooneyviskosität erhöht wird und der kalte Fluß reduziert und die Molmassenverteilung modifiziert werden kann.

Aus der DE-B-1 128 666 ist bekannt, konjugierte Diene in Gegenwart eines lithiumorganischen Initiators und Divinylbenzol (DVB) zu polymerisieren. In der DE-27 00 294 wird als Variation dieses Verfahrens die Zugabe von DVB nach beendeter Polymerisation beschrieben. Es entstehen Polymere mit einem sternförmigen Aufbau und einem räumlichen kleinen Kupplungszentrum.

Ähnliche Produkte werden durch die in EP 0 161 021 beschrieben Kupplung mit tri- und tetra-Isopropenyl-Verbindungen erhalten. Weitere Beispiele für die Kupplung von anionisch hergestellten lebenden Polymeren mit polyvinylaromatischen Kupplungsmitteln finden sich in der EP-A-083 574 und der US-PS 4 116 917.

Von der Kupplungsreaktion erwartet man eine Eigenschaftsverbesserung des Polymerisates, wobei es für eine Reihe von Anwendungen von Interesse ist hohe Kupplungsausbeuten zu erzielen, während bei anderen Einsatzgebieten eine unvollständige Kupplung von Vorteil sein kann. Hohe Kupplungsausbeuten werden z.B. bei Polymeren angestrebt, die als Viskositätsindex-Verbesserer in Mineralölen verwendet werden. Definierte Anteile an ungekuppelten Produkt verbessern dagegen die Fließfähigkeit von sternförmig aufgebauten Blockcopolymeren bei der Verarbeitung durch Spitzguß.

Es ist deshalb wünschenswert, Kupplungsreagenzien einzusetzen, die eine möglichst exakte Einstellung des mittleren Kupplungsgrades und des Anteils an ungekuppelten Polymeren ermöglichen.

Beim DVB ist dies nicht der Fall - bereits 2 Äquivalente DVB je reaktivem Lithiumatom sind genug, um eine weitreichende Kupplung (über 90 %, Kupplungsgrad 8) des Polymerisats zu bewirken. Mit steigendem DVB/Li-Verhältnis entstehen Polymere mit größerer Sternastzahl. Die mögliche Sternastzahl ist aus sterischen Gründen begrenzt, so daß eine Erhöhung des DVB/Li-Verhältnisses (10 : 1) keinen weiteren Einfluß mehr auf die Kupplungsausbeute ausübt.

Eine exakte Dosierung des DVB wird ferner dadurch erschwert, daß es zumeist nur in technischer Qualität zugänglich ist (vgl. US 3 855 189). Gewöhnlich sind neben 55 - 65 Gew.-% DVB als Mischung seiner Isomeren noch Ethylvinylbenzol und Diethylbenzol vorhanden.

Das Eigenschaftsbild gekuppelter Polymerisate zeigt in vielen Fällen ein Optimum bei einer mittleren Sternastzahl von 3 - 10 Polymerarmen, die jedoch mit DVB nur unter erheblichen Problemen und mit einer schlechten Reproduzierbarkeit einzustellen ist.

Aufgabe der Erfindung war es daher, sternförmige Polymerisate durch die Verwendung eines auf einfachem Wege in reiner Form zugänglichen Kupplungsmittels herzustellen und ein Verfahren zur Kupplung der lebenden Polymeren zu finden, das eine exakte Einstellung der sternastzahl k im Peakmaximum der Molekulargewichtsverteilungsfunktion ermöglicht und zugleich den Kupplungsgrad nach oben begrenzt, so daß k im Zahlenmittel vorzugsweise gleich oder kleiner 10 ist.

Diese Aufgabe wird erfindungsgemäß gelöst durch die Verwendung von Hexatrien der allgemeinen Summenformel C₆H₈ als Kupplungsagens.

Von den verschiedenen Isomeren des Hexatriens hat sich das trans-1,3,5-Hexatrien am besten bewährt. Zu seiner Herstellung greift man vorzugsweise auf das in Liebigs Annalen der Chemie 608, Seiten 195-215 (1957) beschriebene Verfahren zurück.

Erfindungsgemäß erhält man sternförmig verzweigte Polymerisate der allgemeinen Formel [A-]ₖX, bei der A für den einwertigen Rest eines Homopolymerisats, Blockcopolymerisats oder statistischen Copolymerisats eines konjugierten Diens und/oder vinylaromatischen Kohlenwasserstoffs steht, k eine Zahl zwischen 1 und 10 angibt und X den k-wertigen Rest des durch Kupplung mit Hexatrien entstandenen Kupplungszentrums bedeutet, indem man nach praktisch vollständigem Umsatz einer anionischen Polymerisation die erhaltenen linearen Polymeren mit aktiven endständigen Lithium-Kohlenstoffbindungen durch Zusatz von Hexatrien oder evtl. einer Mischung eines Diens oder Vinylaromaten und Hexatrien kuppelt. Diese Verfahrensweise führt zu räumlich ausgedehnteren Kupplungszentren, was bei der Hydrierung der gekuppelten Polymerisate von Vorteil sein kann, da die Hydrierzeiten deutlich geringer sind. Durch das molare Verhältnis von Hexatrien zum lebenden Polymeren kann der Kupplungsgrad k und die Kupplungsausbeute exakt eingestellt werden.

Unter Homo-, Co- und Blockcopolymerisaten aus Vinylaromaten und/oder Dienen sind die bekannten Polymerisate dieser Art zu verstehen, die anionisch z.B. mit Hilfe von alkalimetallorganischen Initiatoren aus den entsprechenden Monomeren erhalten werden können. Derartige Verfahren sind so bekannt, daß sie hier nicht weiter erörtert werden müssen (vgl. z.B. GB-Patent 1 444 680, Journal of Applied Polymer Science, 22, [1978], Seite 2007 - 2913).

Als Vinylaromat kommt insbesondere Styrol, die verschiedenen Alkylstyrole und Vinylnaphthalin, als Dien Butadien, Isopren, 2,3-Dimethylbutadien, Piperylen, Phenylbutadien oder andere anionisch polymerisierbare konjugierte C₄ bis C₁₂-Diene in Betracht. Außer den jeweiligen Homopolymerisaten copolymerisate von Vinylaromaten und Dienen in Frage, wobei je nach Wahl des Initiators und des Lösungsmittels Blockcopolymerisate mit unterschiedlich statistischer Verteilung der Monomeren erhalten werden können.

Als Initiatoren dienen die bekannten Monolithiumkohlenwasserstoffe der allgemeinen Formel RLi, worin R einen aliphatischen, cycloaliphatischen, aromatischen oder gemischt aliphatisch-aromatischen Kohlenwasserstoffrest darstellt. Der Kohlenwasserstoffrest kann 1 bis 12 Kohlenstoffatome besitzen. Als Beispiel für erfindungsgemäß einzusetzende anionische Initiatoren seien Methyllithium, Ethyllithium, Propyllithium, (n-, sec-.-tert.-) Butyllithium, Isopropyllithium, Cyclohexyllithium, Phenyllithium und Toluyllithium genannt. Vorzugsweise werden Monolithiumalkylverbindungen mit 2 bis 6 Kohlenstoffatome in der Alkylkette eingesetzt, wobei n-Butyllithium und sec.-Butyllithium besonders bevorzugt sind.

Die Polymerisation wird i.a. in einem inerten organischen Kohlenwasserstoff als Lösungsmittel durchgeführt. Geeignete Lösungsmittel sind aliphatische, cycloaliphatische oder aromatische Kohlenwasserstoffe, die unter den Reaktionsbedingungen flüssig sind und vorzugsweise 4 bis 12 Kohlenstoffatome enthalten. Als Lösungsmittel kommen beispielsweise Isobutan, n-Pentan, Isooctan, Cyclopentan, Cyclohexan, Cycloheptan, Benzol, Toluol oder Xylol in Frage. Ebenso können Gemische dieser Lösungsmittel eingesetzt werden. Ferner ist es möglich, die Polymerisation in Gegenwart geringer Mengen, im allgemeinen 10⁻³ bis 5 Gew.-%, bezogen auf die Gesamtmenge an Lösungsmittel, eines Ethers, wie Tetrahydrofuran, Dimethoxyethan, Phenylmethylether durchzuführen, wodurch in bekannter Weise die Polymerisationsgeschwindigkeit, die Konfiguration des Diensegments sowie auch der statistische Einbau der Monomeren beeinflußt werden kann. Die Konzentration der Monomeren ist nicht kritisch und kann so eingestellt werden, daß jede gewünschte Vorrichtung für die Polymerisation verwendet werden kann. Üblicherweise wird in 10 bis 30 gew.-%igen Lösungen polymerisiert.

Die Polymerisation erfolgt unter den für die anionische Polymerisation mit lithiumorganischen Verbindungen üblichen Bedingungen, insbesondere unter Luft- und Feuchtigkeitsausschluß. Die Polymerisationstemperatur kann zwischen 0 und 120°C liegen und wird vorzugsweise zwischen 40 bis 80°C gehalten.

Die Polymerisation wird bis zur praktisch vollständigen Umsetzung des eingesetzten Monomeren geführt. Man erhält so eine Lösung von lebenden, linearen Polymeren mit aktiven, endständigen carbanionischen Zentren, welche zur weiteren Anlagerung von Monomeren fähig sind.

Die ungekuppelten Polymeren weisen im allgemeinen mittlere Molekulargewichte (Mn) zwischen 500 und 150 000 g/mol auf.

Als Kupplungsmittel sind alle konjugiert olefinischen Verbindungen der Summenformel C₆H₈, namentlich cis- bzw. trans-1,3,5-Hexatrien sowie 3-Methylen-1,4-pentadien, geeignet. Es handelt sich dabei um Verbindungen mit insgesamt drei Doppelbindungen, die nach der Addition eines carbanionisch terminierten Polymeren an eine der drei Doppelbindungen und anschließender Addition eines weiteren Hexatrien-Moleküls bzw. eines Monomeren zur Ausbildung einer Butadienstruktur befähigt sind. An die entstandene Butadiensequenz kann ein weiteres, carbanionisch terminiertes Polymer addiert werden, so daß auf diesem Weg die Verzweigung einsetzt. Mehrfache Wiederholung der Sequenz aus Hexatrien-Addition und Addition eines "lebenden" Polymeren bzw. aufeinander folgende Addition mehrerer Hexatrien-Moleküle und anschließende Addition der lebenden Polymeren an die entstandene Butadiensequenzen führt zur Bildung von sternförmigen Polymerisaten. Eine Addition von zwei lebenden Polymeren an ein Hexatrien-Molekül erscheint wegen der hohen elektrostatischen Abstoßung, die beim zweiten Additionsschritt zu überwinden ist, wenig wahrscheinlich. Im Gegensatz zum DVB, dessen Struktur eine unabhängige Reaktion der 2 Vinylgruppen erlaubt, kann beim Hexatrien somit nicht von einer unabhängigen Reaktion der beiden terminalen Doppelbindungen ausgegangen werden. Weiterhin besteht die Möglichkeit, daß der Einbau des Hexatriens in die Polymerkette in 1,2-Position, 1,6-Position oder 1,4-Position erfolgt. Im letzteren Fall entstehen zwei separierte Vinylgruppen, die nicht zur Addition eines lebenden Polymeren befähigt sind. Die Unterschiede in der Reaktivität von Hexatrienen einerseits und DVB andererseits begründen die, verglichen mit DVB, geringere Kupplungseffizienz der Hexatriene und damit auch die bessere Dosierbarkeit. Vorzugsweise setzt man zur Kupplung 2 - 100 mol des betreffenden Hexatriens je mol des lebenden Polymeren ein. Ganz besonders bevorzugt ist ein Verhältnis von 3 - 20 mol Trien zu 1 mol des lebenden Polymeren. Das nach der Kupplung entstehende sternförmige Polymer ist weiterhin ein lebendes Polymer.

Das Kupplungsmittel kann in einer oder mehreren Portionen zum lebenden Polymer zugegeben werden. Mitunter ist es dabei von Vorteil, das Hexatrien mit einem inerten Lösungsmittel oder mit einem konjugierten Dien zu verdünnen und über einen längeren Zeitraum in das Reaktionsgefäß einzuspeisen.

Die Kupplung kann innerhalb eines weiten Temperaturbereichs durchgeführt werden, beispielsweise bei einer Temperatur zwischen 20 und 120°C, wobei Temperaturen zwischen 40 bis 80°C bevorzugt sind. Auch diese Umsetzung wird in inerter Atmosphäre, beispielsweise unter Schutzgas durchgeführt.

Das erhaltene sternförmig aufgebaute lebende Polymerisat kann noch mit weiteren Mengen an monomeren Verbindungen umgesetzt werden, beispielsweise mit den gleichen oder anderen Dienen und/oder vinylaromatischen Verbindungen des bereits erläuterten Typs. Durch eine solche Reaktion wird nicht nur die Anzahl der Polymerketten erhöht, sondern es werden auch sternförmig aufgebaute lebende Polymerisate gebildet, welche mindestens zwei unterschiedliche Arten von Polymerketten aufweisen.

Polymerisate mit unterschiedlichen Arten von Polymerketten können auch dadurch erzeugt werden, daß man lebende Polymerisate unterschiedlicher Zusammensetzung getrennt herstellt und vor der Kupplung vereinigt.

Das sternförmig aufgebaute Polymerisat kann ein nahezu beliebiges Molekulargewicht aufweisen. üblicherweise entstehen Polymerisate mit einem mittleren Molekulargewicht Mₙ im Bereich von 25 000 bis 1 000 000, wobei Polymerisate mit einem Molekulargewicht von 70 000 bis 400 000 g/mol besonders bevorzugt sind. Zweckmäßig wird das Molekulargewicht mittels GPC ermittelt, wobei das mittlere Molekulargewicht Mₙ nach der Streifenmethode bestimmt wird. Das Molekulargewicht im Peakmaximum läßt sich mit Hilfe einer Eichkurve graphisch ermitteln. Weiterhin kann die Charakterisierung der Polymerisate über Messungen der Viskositätszahl nach DIN 53 726 erfolgen.

Sternförmig aufgebaute Polymerisate, welche noch lebende Polymere darstellen, können anschließend in bekannter Weise durch Zusatz einer Verbindung desaktiviert werden, die mit der carbanischen Gruppe reagiert. Als derartige Desaktivatoren eigenen sich Verbindungen mit einem oder mehreren aktiven Wasserstoffatomen, wie Wasser, einem Alkohol sowie Carbonsäuren oder Verbindungen mit einem Halogenatom, wie Benzylchlorid. Auch Verbindungen mit einer Estergruppe sowie Kohlendioxid können als Desaktivatoren eingesetzt werden.

In die verzweigten lebenden Polymerisate können außerdem mit entsprechenden Reagentien (Ethylenoxid, Ethylensulfid oder Schiff'sche Basen) funktionelle Endgruppen eingeführt werden.

Anschließend an die Desaktivierung oder Funktionalisierung und zweckmäßigerweise vor Isolierung des Produktes aus dem Reaktionsgemisch kann das verzweigte Blockcopolymerisat noch hydriert werden. Die Hydrierung kann dabei selektiv oder unselektiv erfolgen und wird normalerweise mit Hilfe von molekularem Wasserstoff und Katalysatoren auf der Basis von Metallen und Metallsalzen der 8. Nebengruppe des Periodensystems durchgeführt. Geeignete Systeme sind in US-A-3 113 986, DE-B-1 222 260 und DE-A-2 013 263 beschrieben. Dabei werden unter milden Bedingungen bei einem Wasserstoffdruck zwischen 1 und 100 bar und einer Temperatur zwischen 25 bis 150°C die olefinischen Doppelbindungen hydriert. Die Hydrierung kann auch in heterogener Phase mit Nickel oder Platin durchgeführt werden. Der Restgehalt an olefinischen Doppelbindungen liegt zumeist unter 10 %, bevorzugt unterhalb von 3 %. Zur Hydrierung werden vorzugsweise Polymerisate eingesetzt, die in Gegenwart geringer Mengen Ether hergestellt worden sind.

Zur Isolierung der Polymeren kann das Polymergemisch in bekannter Weise direkt zur Trockne erhitzt oder mit Wasserdampf behandelt werden, wobei das Lösungsmittel abdestilliert. Es kann auch in einem Überschuß Nichtlösungsmittel wie z.B. Ethanol gefällt, mechanisch abgetrennt, getrocknet und mittels Extruder aufgearbeitet werden.

Die nach dem erfindungsgemäßen Verfahren hergestellten gekuppelten Homo- oder Copolymeren können in bekannter Weise mit gebräuchlichen Stabilisatoren, Verstärkungsmitteln, Füllstoffen und weiteren Zusatzmitteln versetzt werden.

Die Molekulargewichte der in den Beispielen hergestellten Polymeren wurdenmittels GPC bestimmt. Als Eichsubstanz zur Kalibrierung der Säulen (µ-Ultrastyragel® 500, 1000, 1000 und 10000) diente bei Blockcopolymeren Polystyrol bzw. bei Dienpolymerisaten Polyisopren und Polybutadien. Die mobile Phase war THF. Zur Berechnung der Molekulargewichte Mₙ wurde ein GPC-Software-System der Firma Polymer-Standards (Mainz, Deutschland) eingesetzt.

### Beispiel 1

In einem unter Reinstickstoff mit einer Lösung von n-Buthyllithium in Cyclohexan gespülten, thermostatisierten 1- -Liter-Reaktionsgefäß, das mit Rührer und Thermometer versehen ist, werden 300 ml Cyclohexan, 1,2 ml THF und 0,5 g Styrol vorgelegt. Bei 60°C wird mit einer Injektionsspritze unter gutem Rühren so lange 0,2 molare Lösung von sek. -Butyllithium in Hexan zugegeben, bis eine bleibende schwache Gelbfärbung entsteht. Daraufhin werden weitere 1,8 mmol sek.-Butyllithium zugesetzt. Sodann läßt man 34 g Styrol langsam zutropfen. Nach einer Stunde werden 28,2 g Butadien zugegeben und zur vollständigen Polymerisation 90 Minuten bei 60°C gerührt. Dem Reaktionsgefäß wird eine Probe entnommen, die in Ethanol ausgefällt, isoliert und getrocknet wird.
Probe 1: (lineares Polymer)
   Molekulargewicht Mₙ: 47 000 g/mol
   Anschließend werden zur Kupplung des gebildeten Living-Polymerisats 5,4 mmol trans-1,3,5-Hexatrien zugetropft. Die Lösung wird eine Stunde bei 60°C gerührt, wobei die Farbe von schwach gelb nach rot umschlägt. Dann wird eine Probe entnommen.
Probe 2: (gekuppeltes Polymer, 3 Eq. trans-1,3,5-Hexatrien)
   Molekulargewicht Mₙ: 58 000 g/mol, Kupplungsausbeute 35 %, Maximum des Kupplungspeaks (Mₖ) : 100 000 g/mol
   Es werden nochmals 5,4 mmol trans-Hexatrien zugetropft und die Lösung für eine weitere Stunde auf 60°C erhitzt. Nach einer Stunde wird wiederum eine Probe entnommen.
Probe 3: (gekuppeltes Polymer, 6 Eq. trans-1,3,5-Hexatrien)
   Molekulargewicht Mₙ = 87 000 g/mol, Kupplungsausbeute 75 %, Maximum des Kupplungspeaks (Mₖ) : 240 000 g/mol
   Abermals werden 5,4 mmol trans-1,3,5-Hexatrien zugetropft. Eine Stunde wird bei 60°C nachgerührt, dann bricht man mit einigen Tropfen Methanol die Polymerisation ab.
Probe 4: (Endprobe)
   Molekulargewicht Mₙ = 110 000 g/mol, Kupplungsausbeute 88 %, Maximum des Kupplungspeaks (Mₖ) : 260 000 g/mol
   Insgesamt werden 16,2 mmol trans-Hexatrien zugetropft, was 9 Eq. je mol carbanionisch terminierten Polymers entspricht.

### Beispiel 2

Entsprechend Beispiel 1 wird ein lineares Copolymerisat gleicher Zusammensetzung hergestellt, jedoch wird zuerst Butadien und anschließend Styrol polymerisiert, so daß die Kupplung über Benzylanionen erfolgt.
Probe 1 (lineares Blockcopolymer):
   Molekulargewicht (Mₙ) : 57 000 g/mol
Probe 2: (gekuppeltes Polymer, 3 Eq. trans-1,3,5-Hexatrien)
   Molekulargewicht (Mₙ) : 98 000 g/mol, Kupplungsausbeute 60 %, Maximum des Kupplungspeaks (Mₖ) : 200 000 g/mol
Probe 3 (gekuppeltes Polymer, 6 Eq. trans-1,3,5-Hexatrien):
   Molekulargewicht (Mₙ) : 131 000 g/mol, Kupplungsausbeute 75 %, Maximum des Kupplungspeaks (Mₖ) : 350 000 g/mol
Probe 4 (gekuppeltes Polymer, 9 Eq. trans-1,3,5-Hexatrien)
   Molekulargewicht (Mₙ) : 150 000 g/mol, Kupplungsausbeute 80 %, Maximum des Kupplungspeaks (Mₖ) : 410 000 g/mol

### Beispiel 3

Entsprechend Beispiel 2 wird ein lebendes Butadien-Styrol-Blockcopolymer mit einem Molekulargewicht von 28 000 g/mol hergestellt. Bei einer Temperatur von 60°C werden 12 Eq. trans-1,3,5-Hexatrien je mol carbanionischen gebundenen Lithiums zugesetzt. Es wird eine Stunde nachgerührt und dann alt Methanol abgebrochen.
Probe 1: (lineares Polymer)
   Molekulargewicht (Mₙ) : 28 000 g/mol
Probe 2: (gekuppeltes Polymer, 12 Eq. trans 1,3,5-Hexatrien)
   Molekulargewicht (Mₙ) : 188 000, Kupplungsausbeute: 96 %, Maximum des Kupplungspeaks (Mₖ) : 243 000

### Beispiel 4:

Nach der Vorschrift der Beispiele 1 und 2 wird ein aus 90 Gew.-% Polybutadien und 10 Gew.-% Polystyrol bestehendes living polymer hergestellt und bei 60°C mit 12 Eq. trans-1,3,5-Hexatrien je mol carbanionisch terminierten Makromolekülen versetzt. Nach einer Stunde wird mit Methanol abgebrochen.
Probe 1: (lineares Polymer)
   Molekulargewicht (Mₙ) : 42 000 g/mol
Probe 2: (gekuppeltes Polymer, 12 Eq. trans-1,3,5-Hexatrien)
   Molekulargewicht (Mₙ) : 140 000 g/mol, Kupplungsausbeute 87 %, Maximum des Kupplungspeaks (Mₖ) : 260 000

### Beispiel 5

In einem thermostatisierten und inertisierten 1 l-Reaktionsgefäß, das mit Rührer und Thermometer versehen ist, werden 300 ml Cyclohexan, 1,2 ml THF und 0,5 g Styrol vorgelegt. Bei 60°C wird mit einer Injektionsspritze unter gutem Rühren so lange 0,2 molare Lösung von sek.-Butyllithium in Hexan zugegeben, bis eine bleibende schwache Gelbfärbung entsteht. Daraufhin werden weitere 2,5 mmol sek.-Butyllithium zugesetzt. Sodann läßt man 60 g Butadien langsam zutropfen. Nach 90 Minuten wird eine Probe entnommen. Anschließend werden 30 mmol trans-1,3,5-Hexatrien zugespritzt und eine Stunde bei 60°C gerührt.
Probe 1: (lineares Polymer)
   Molekulargewicht (Mₙ) : 26 000 g/mol
Probe 2: (gekuppeltes Polymer, 12 Eq. trans-1,3,5-Hexatrien)
   Molekulargewicht (Mₙ) : 110 000, Kupplungsausbeute: 85 %, Maximum des Kupplungspeaks (Mₖ) : 210 000

### Beispiel 6

Entsprechend Beispiel 5, jedoch unter Verwendung von Isopren anstelle von Butadien wurde eine Probenfolge hergestellt, die folgende Eigenschaften hatte:
Probe 1: (lineares Polymer)
   Molekulargewicht (Mₙ) : 26 000
Probe 2: (gekuppeltes Polymer, 12 Eq. trans-1,3,5-Hexatrien)
   Molekulargewicht (Mₙ) : 78 000, Kupplungsausbeute 80 %, Maximum des Kupplungspeaks (Mₖ) : 167 000

### Beispiel 7

Entsprechend zu Beispiel 5, jedoch mit Isopren anstelle von Butadien und ohne THF als Cosolvens wurden die folgenden Ergebnisse erzielt:
Probe 1: (lineares Polymer)
   Molekulargewicht (Mₙ) : 25 000
Probe 2: (gekuppeltes Polymer)
   Molekulargewicht (Mₙ) : 94 000, Kupplungsausbeute 84 %, Maximum des Kupplungspeaks (Mₖ) : 147 000

### Beispiel 8

Die selektive Hydrierung des Copolymerisats nach Beispiel 1 wurde in der bei der Polymerisation anfallenden Lösung durchgeführt. Als Hydrierkatalysator wurde eine Mischung aus 0,14 g Nickel (II)-acetylacetonat und 3 ml einer 6 %igen Lösung von Aliminiumtriisobutyl in Toluol eingesetzt. Der Hydrierreaktor wird mit 15 bar Wasserstoffdruck beaufschlagt und die Temperatur bei 80 - 90°C gehalten. Nach 600 Minuten ist die Hydrierung der olefinischen Doppelbindungen nahezu vollständig (97 %).

## Patentansprüche

1. Sternförmig verzweigtes Copolymerisat der allgemeinen Formel [A-]ₖX, in der A für den einwertigen Rest eines Homopolymerisats, Blockcopolymerisats oder statistischen Copolymerisats eines konjugierten Diens und/oder vinylaromatischen Kohlenwasserstoffs steht, k eine Zahl zwischen 1 bis 10 angibt und X den k-wertigen Rest eines durch Kupplung mit Hexatrien entstandenen Kupplungszentrums bedeutet.

2. Hydriertes Copolymerisat, wie es erhalten wird durch partielle oder vollständige Hydrierung eines Copolymerisats der allgemeinen Formel [A-]ₖX des Anspruchs 1.

3. Verwendung eines Hexatriens der Summenformel C₆H₈ als Kupplungsagens für lebende Polymere zur Herstellung eines sternförmig verzweigten Copolymerisats laut Anspruch 1.

## Claims

1. A copolymer with stellate branching, of the general formula [A-]ₖX, where A is the monovalent radical of a homopolymer, block copolymer or random copolymer of a conjugated diene and/or vinyl-aromatic hydrocarbon, k is a number from 1 to 10, and X is the k-valent radical of a coupling center produced by coupling with hexatriene.

2. A hydrogenated copolymer as obtained by partial or complete hydrogenation of a copolymer of the general formula [A-]ₖX of claim 1.

3. A method of using a hexatriene of the empirical formula C₆H₈ as a coupling agent for living polymers, for the preparation of a copolymer with stellate branching as claimed in claim 1.

## Revendications

1. Copolymère ramifié en étoile de formule générale [A-]ₖX dans laquelle A est mis pour un reste monovalent d'un homopolymère, d'un copolymère séquencé ou d'un copolymère statistique d'un diène conjugué et/ou d'un hydrocarbure vinylaromatique, k désigne un nombre compris entre 1 et 10 et X représente un reste de valence k d'un centre de couplage formé par couplage avec un hexatriène.

2. Copolymère hydrogéné tel qu'il est obtenu par hydrogénation partielle ou complète d'un copolymère de formule générale [A-]ₖX de la revendication 1.

3. Utilisation d'un hexatriène de formule brute C₆H₈ comme agent de couplage pour polymères vivants pour la préparation d'un copolymère ramifié en étoile selon la revendication 1.
